**Europäisches Patentamt**

**European Patent Office**

**Office européen des brevets**

(11) Veröffentlichungsnummer: **0 232 221**
**B1**

(12) **EUROPÄISCHE PATENTSCHRIFT**

(45) Veröffentlichungstag der Patentschrift:
23.08.89

(21) Anmeldenummer: 87810041.1

(22) Anmeldetag: 23.01.87

(51) Int. Cl.⁴: **C22B 21/00, C22B 7/00**

(30) Priorität: 05.02.86 CH 452/86

(43) Veröffentlichungstag der Anmeldung:
12.08.87 Patentblatt 87/33

(45) Bekanntmachung des Hinweises auf die Patenterteilung:
23.08.89 Patentblatt 89/34

(84) Benannte Vertragsstaaten:
AT BE CH DE ES FR GB GR IT LI LU NL SE

(56) Entgegenhaltungen:
EP-A- 0 034 579
DE-A- 3 040 718
DE-C- 862 683
US-A- 4 007 036
US-A- 4 060 408

(73) Patentinhaber: SCHWEIZERISCHE ALUMINIUM AG,
CH-3965 Chippis(CH)

(72) Erfinder: Roggen, Rolf, Schlossgasse 29,
CH-1950 Sion(CH)
Erfinder: Buxmann, Kurt, Route de Sion 28,
CH-3960 Sierre(CH)
Erfinder: Pannier, Françoise, 220 bis, Avenue Paul
Doumer, F-92500 Rueil Malmaison(FR)

(54) Verfahren und Vorrichtung zur Aufbereitung feinteiligen Aluminiumschrotts.

**Beschreibung**

Die Erfindung betrifft ein Verfahren zur Aufbereitung feinteiligen Aluminiumschrotts durch Aufschmelzen des Schrotts in einer Aluminiumschmelze und Abscheiden der aufgetauchten, pulverisierten Krätze.

Zudem liegt im Rahmen der Erfindung eine Vorrichtung hierfür, mit einer Schrottbeschickungsanlage, einem Schrottaufschmelzmodul, einer in dieses mündenden, mit einer Pumpe versehenen Schmelzezuführung, einem dem Schrottaufschmelzmodul nachgeschalteten, mit Schmelze gefüllten Schmelzekanal, einer über diesem angebrachten Vorrichtung zur Krätzeentnahme und einem Schmelzeabfluss.

Aluminiumschrotte mit hoher Feinteiligkeit, beispielsweise Bearbeitungsspäne von Gussstücken oder Granalien, die bei der Aufbereitung von Aluminiumkrätze anfallen, lassen sich mit den üblichen Umschmelzverfahren, wie Herdöfen oder Rinneninduktionsöfen, nicht mehr einschmelzen, weil hierbei zu hohe Metallverluste entstehen. Sie werden deshalb in Salzbadtrommelöfen umgeschmolzen, wobei sie in einen rotierenden, eine Salzschmelze enthaltenden Ofen eingetaucht werden. Das flüssige Salz vermeidet das Verbrennen des feinteiligen Aluminiums und dient gleichzeitig der Trennung von metallischem und oxidischem Anteil des Einsatzgutes.

Das Einschmelzen von Aluminiumschrotten in Salzbadtrommelöfen ist jedoch sehr problembehaftet. Einerseits entstehen im Ofen Salzdämpfe, die sich nur schwer aus der Ofenatmosphäre herausfiltrieren lassen. Die Filter sind wegen der stark korrosiven Wirkung des Salzes sehr verschleissanfällig. Weiterhin entstehen grosse Mengen an Salzabfällen, die mit den oxidischen Anteilen des Aluminiums aufgeladen sind, welche auf Salzdeponien gebracht werden müssen. Solche Deponien sind jedoch nur mit Schwierigkeiten gegen Grundwasser oder Flüsse abzuschirmen. Verfahren zur Reinigung der Salze von oxidischen Verunreinigungen wiederum sind infolge der korrosiven Wirkung der Salze mit hohen Unterhaltskosten behaftet.

Aluminium mit etwas geringerer Feinteiligkeit, beispielsweise Dünnbandabfälle oder gebrauchte Getränkedosen, sowie Frässpäne von Stranggussbarren lassen sich auch ohne Salzbadtrommelofen, beispielsweise in Rinneninduktionsöfen oder in Vorherdöfen einschmelzen, jedoch entstehen dabei Metallverluste, weil das Aufschmelzen nicht unter Luftabschluss erfolgt, so dass nur ein Teil des feinteiligen Einsatzmetalls einschmelzen kann. Ein beträchtlicher Teil des Metalls verbrennt an der Atmosphäre. Dies bewirkt neben dem Metallverlust auch ein übermässiges, schwer kontrollierbares Ansteigen der Temperatur im Behandlungsraum. Solche Verfahren mit Vorherdöfen sind etwa aus den US-Patenten 4 128 415 und 4 286 985 bekannt. Auch im US-Patent 4 191 559 wird ein Verfahren beschrieben, bei dem Schmelze aus einem Ofen in einen Vorherd gepumpt und dort Schrott eingetaucht wird. Die resultierende, mit Krätze behaftete Schmelze wird sodann in eine Kammer geführt, in welcher eingeleitete Gase die Krätze an die Badoberfläche treiben. Die sich dort ansammelnde Krätze wird mittels darin rotierenden horizontalen Stäben teilweise entmetallisiert und pulverisiert. Eine darüber angebrachte Luftstrahlpumpe saugt diese Krätze ab, worauf sie im Luftstrahl abgekühlt wird. Die Schmelze wird sodann wieder in den Ofen zurückgeführt. In diesem Verfahren verursacht vielfältiger Luftkontakt, sowohl der Schmelze als auch der Krätze, eine stark reduzierte Metallausbeute, welche noch dadurch verstärkt wird, dass die in der Krätze vorhandene Metallschmelze nur ungenügend abgeschieden wird.

Der Erfindung liegt daher die Aufgabe zugrunde, ein Verfahren zur Aufbereitung feinteiligen Aluminumschrotts eingangs genannter Art zu schaffen, welche eine erhöhte Ausbeute ermöglicht und arbeitshygienischen Forderungen entspricht. Zudem soll eine weitgehende Mechanisierung und Automatisierung des Einschmelzens und der Krätzeentnahme ermöglicht werden. Unter Aluminium sind hierbei auch alle vorwiegend aus Aluminium bestehenden Legierungen zu verstehen.

Weiter soll eine Vorrichtung bereitgestellt werden, mittels welcher das aufgabengemässe Verfahren durchgeführt werden kann.

In Bezug auf das Verfahren wird die Aufgabe erfindungsgemäss dadurch gelöst, dass der Behandlungsraum von der Auftauchstelle der Krätze aus der Schmelze bis zur Krätzeentnahme unter Luftabschluss mit einem Sauerstoffpartialdruck von höchstens 5 kPa steht und dass die Krätze kontinuierlich von der Schmelzeoberfläche abgezogen, mittels Vibration fluidisiert, durch eine Zone indirekter Kühlung geführt und dabei auf unter 200 °C abgekühlt wird, wobei der Weg der Krätze bis zu ihrer Abkühlung auf weniger als 200 °C unter Luftabschluss mit einem Sauerstoffpartialdruck von höchstens 5 kPa steht.

In bezug auf die Vorrichtung wird die Aufgabe erfindungsgemäss dadurch gelöst, dass der Schmelzkanal im Bereich der aufgetauchten Krätze im mit Schmelze, Krätze und Gas gefüllten Betriebszustand luftdicht abgekapselt ist, sowie dass der Schmelzekanal oberhalb des Schmelzebadniveaus, als Teil der Krätzeentnahmevorrichtung eine Mündung aufweist, an welcher ein abfallender Krätzeabführkanal angebracht ist, an dem eine Krätzeabkühlungsanlage angeschlossen ist, welche einen Vibrationsförderkanal aufweist, der an seiner Aussenseite mit Kühlvorrichtungen versehen und der mit einem Vibrator verbunden ist, wobei der Krätzeabführkanal und der Vibrationsförderkanal im mit Krätze und Gas gefüllten Betriebszustand nach aussen luftdicht abgekapselt sind.

Diese Massnahmen verhindern weitgehend Metallverluste, sowohl bei der Schmelze als auch bei der Krätze. Die Krätze fällt in einem weit geringeren Masse und in höherwertiger, weiterverwendbarer Form an.

In einem bevorzugten erfindungsgemässen Verfahren wird

a) der Schrott rasch unter die Schmelzeoberfläche getaucht und dort einem Schmelzestrahl ausgesetzt,

b) welcher in einen Schmelzestrom unter dessen Oberfläche eingeleitet wird,

c) die sich stromabwärts an der Schmelzeoberfläche ansammelnde Krätze wiederholt geknetet und in die Schmelze getaucht,

d) die wiederaufgetauchte Krätze anschliessend über der Schmelzeoberfläche im wesentlichen parallel zu dieser bei einer Temperatur von mindestens dem Liquidus des dort vorliegenden Metalls mehrfach umgerührt und anschliessend in pulverisiertem und schüttfähigem Zustand von der Schmelzestromoberfläche abgeschoben und

e) der Schmelzestrom unter Regulierung seines Niveaus einem Abfluss zugeführt.

Diese Massnahmen bewirken ein rasches Aufschmelzen des eingetauchten Schrotts, eine starke Reduktion der eingebrachten Luftmenge und der entstehenden Krätzemenge, sowie eine weitgehende Entmetallisierung der Krätze.

Zur weitgehenden Vermeidung des Lufteintritts über die Schrottbeschickungsanlage kann diese im Gegenstrom von Ofenabgasen durchströmt werden.

Der nach dem Eintauchen gebildete Krätzefluss erreicht bis zu 50 Gew.-% des Schrottflusses. Diese Krätze enthält mehr als 80 % Metall und liegt als thixotrope Dispersion von Gasblasen und Oxideinschlüssen vor. Eine Entmischung im Sinne eines Ausfliessens von Metall aus der Krätze erfolgt durch eine Verringerung der Viskosität mittels Aufheizen in der Schmelze und durch eine mechanische Bearbeitung, welche die Koaleszenz der metallischen Einschlüsse fördert. Infolge der schlechten Wärmeleitfähigkeit erstarrt die Krätze durch Abstrahlung bei Luftabschluss. An der Luft hingegen wäre insbesondere bei Magnesium-haltiger Krätze eine Verbrennung mit bis über 1500 °C steigenden Temperaturen unvermeidlich. Die durch das Ausstampfen zum Teil ausgetrocknete Krätze besteht nun aus Ballungen von Oxidhäuten oder Pulver, in denen flüssige Aluminiumkugeln oder mit Aluminium benetzte Oxidteilchen mit einem Metallgehalt von 30 bis 70 % vorliegen. Diese Krätze darf mit der Schmelze nicht mehr vermischt werden. Durch langsames Ausrühren fördert man weiter die Koaleszenz der fein verteilten Metalleinschlüsse zu grösseren Metalltropfen, die zur darunterliegenden Aluminiumschmelze hinuntersickern. Die obere Krätzeschicht, die nicht unter den Liquidus abgekühlt werden darf, liegt nach mehrminütiger Bearbeitung als staub- und pulverförmiges, schüttfähiges Material vor.

Die Eintauchfrequenz soll 0.1 bis 10 Hz, vorzugsweise 0.5 Hz, die Umrührfrequenz 0.05 bis 1 Hz betragen.

In einem zweckmässigen Verfahren wird die abgeflossene Schmelze erwärmt und mindestens teilweise in einem Kreislauf wieder der Schrotteintauchstelle zugeführt.

Bei einer bevorzugten Ausführung des Verfahrens wird die sich an der Schmelzestromoberfläche ansammelnde Krätze gleichzeitig mit der Tauchbewegung in Richtung der Umrührzone geschoben.

Im Rahmen der Erfindung liegt vorteilhafterweise, dass der Behandlungsraum mit einer Schutzatmosphäre und/oder einer reduzierenden Atmosphäre versehen wird. Als Schutzgas können beispielsweise Abgase benachbarter Oefen eingesetzt werden.

Für eine hohe Metallausbeute hat sich als besonders zweckmässig erwiesen, dem Schrott vor dem Aufschmelzen ein Flussmittel in einem Gewichtsverhältnis von 0.05 bis 2 % beizumischen. Das Flussmittel wird dabei zumeist in Form von Salzen beigegeben; die entsprechende Salzmenge ist erheblich geringer als bei konventionellen Verfahren.

Bevorzugt wird hierbei als Flussmittel ein Salz zugegeben, welches als Zersetzungsprodukt $CO_2$ abgibt.

Die dem Schrott oftmals anhaftenden Oele ergeben nach ihrer Zersetzung im heissen Behandlungsraum willkommene reduzierende Gase. Es ist deshalb zweckmässig, trockenem Schrott vor dem Aufschmelzen ein Oel in einem Gewichtsverhältnis von 0.1 bis 2 % zuzumischen, welches als Crackprodukt ein reduzierendes Gas abgibt.

In einer bevorzugten Ausführung der erfindungsgemässen Vorrichtung ist

a) das Schrottaufschmelzmodul mit dem Schmelzekanal über ein in diesen, unter das Schmelzebadniveau tauchendes Schmelzerohr verbunden,

b) über dem Schmelzekanal, zwischen dem Schmelzerohr und der Krätzeentnahmevorrichtung ein Tauchwerk angebracht, bestehend aus mehreren über die gesamte Breite der Schmelzeoberfläche des Schmelzekanals verteilten, mit vertikaler Komponente beweglichen Stempeln, welche in ihrer tiefsten Lage bis unter das Schmelzebadniveau ragen,

c) der Schmelzeabfluss mit einer Niveauregulieranlage zur Kontrolle des Schmelzebadniveaus im Schmelzekanal ausgerüstet,

d) der den Schmelzeabfluss und die Niveauregulieranlage umfassende Abschnitt des Schmelzekanals vom übrigen Teil des Schmelzekanals durch einen unter das Schmelzebadniveau ragenden Krätzedamm getrennt und

e) über dem Schmelzekanal, zwischen dem Tauchwerk einerseits und dem Schmelzeabfluss und der Mündung des Krätzeabführkanals andererseits ein Krätzerührwerk angebracht, bestehend aus drehbar gelagerten, rechenartigen Rührelementen, welche mehrere in einem gegenseitigen Abstand von 20 bis 100 mm stehende Rührbolzen einer Länge von 30 bis 150 mm aufweisen, wobei die Rührbolzen in ihrer tiefsten Lage bis zu einem Niveau von 0 bis 20 mm über dem Schmelzebadniveau hinunterragen und die Längsachse der Rührbolzen (19) in ihrer tiefsten Lage höchstens 30° von der Vertikalen abweichen.

Als Schrottaufschmelzmodul kann beispielsweise die in der EP-A-133 417 beschriebene Vorrichtung dienen, in welcher Metallschmelze in zwei gegenläufig drehenden, einen Winkel zueinander bildenden Schmelzewalzen aufeinandertrifft.

Die Stempel des Tauchwerks müssen nicht ausschliesslich vertikal bewegbar sein, jedoch dabei eine vorwiegende vertikale Komponente aufweisen.

In einer zweckmässigen Ausführung der Vorrichtung sind der Schmelzeabfluss und die Schmelzezuführung mit einem Ofen verbunden , welcher Aluminiumschmelze enthält, deren Badniveau tiefer als das Schmelzebadniveau im Schmelzekanal liegt.

Eine einfache und wirksame Verhinderung des Lufteintritts in die Krätzeabkühlanlage wird bei der erfindungsgemässen Vorrichtung erreicht, wenn der Vibrationsförderkanal in seinem Ausgangsbereich einen Siphon aufweist, in welchem die Krätze im Betriebszustand den Kanalquerschnitt luftdicht verschliesst. Die fluidisierte Krätze überwindet die nach unten hängende Kanalschleife des Siphons ungehindert.

Eine bezüglich der Krätzeentmetallisierung besonders wirksame Ausführung des erfindungsgemässen Tauchwerks beinhaltet, dass die Stempel des Tauchwerks am schmelzeseitigen Teil quaderförmig gestaltet sind, wobei diese Quader keilartig mit einem Winkel von 10 bis 45 ° in Richtung Krätzerührwerk ansteigend angeschrägt sind und diese Quader dicht benachbart angeordnet sind. Durch diese Anordnung wird die Krätze gleichzeitig mit der Tauchbewegung in Richtung Krätzerührwerk geschoben. In der tiefsten Lage der Stempel ist der keilförmige Teil bevorzugt in halber Höhe in der Schmelze eingetaucht.

Bei einer besonders zweckmässigen Ausführung des erfindungsgemässen Krätzerührwerks ist eines der Rührelemente derart angeordnet und gestaltet, dass seine Rührbolzen die Krätze über die Mündung in den Krätzeabführkanal abzuschieben vermögen. Dies kann beispielsweise durch eine Lage der Rotationsachse dieses Rührelements erreicht werden welche 10 bis 30° von der Vertikalen in Richtung Mündung abweicht, so dass die Rührbolzen im der Mündung abgewandten Teil der Rotation bis zum Schmelzebadniveau hinunterragen, im anderen Teil hingegen über die Basis der Mündung streichen können.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Figur 1 einen schematisierten vertikalen Längsschnitt durch die Aufbereitungsanlage, ohne Krätzeabkühlungsanlage;

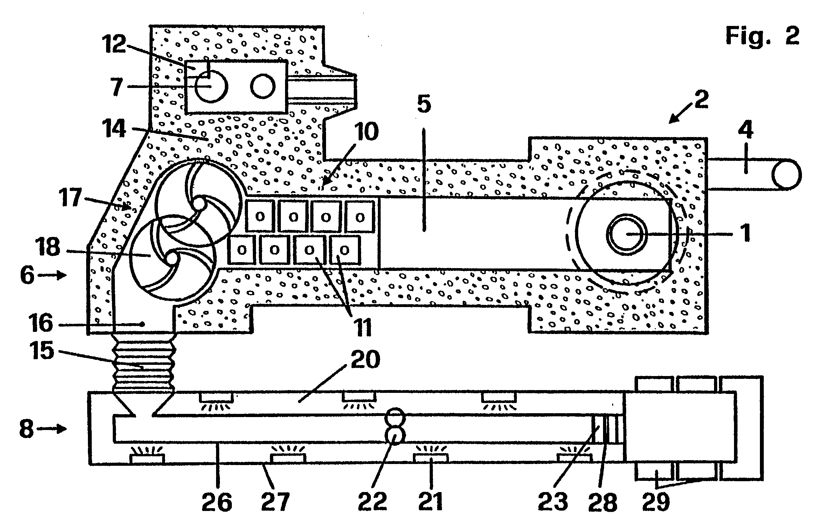

Figur 2 einen schematisierten Horizontalschnitt durch die Aufbereitungsanlage mit der Krätzeabkühlungsanlage;

Figur 3 einen schematisierten vertikalen Querschnitt durch die Aufbereitungsanlage im Bereich der Krätzeabführung.

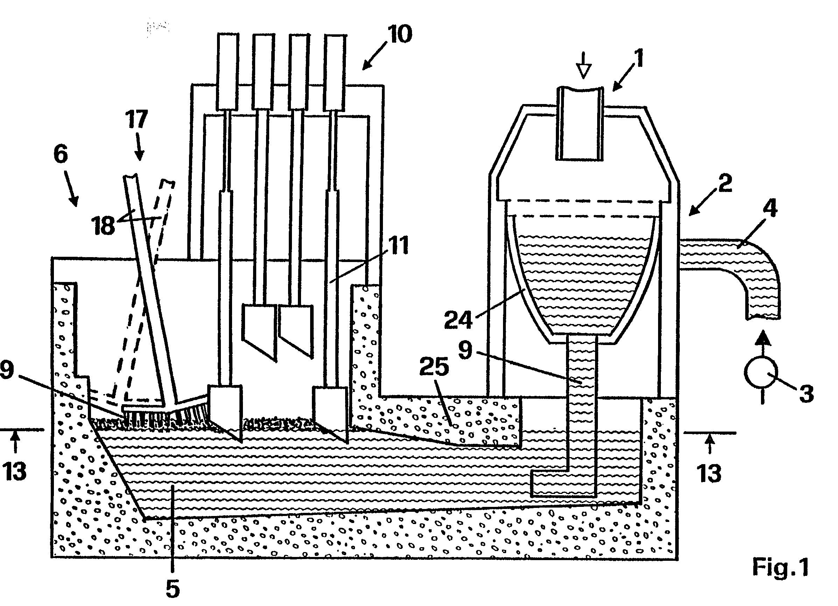

In der in Fig. 1 schematisiert und nicht massstabgetreu dargestellten Schrottaufbereitungsanlage wird feinteiliger Aluminiumschrott in einem Durchsatz von 2.5 t/Stunde über eine vertikale rohrförmige Schrottbeschickungsanlage 1 eingeführt. Durch das eng gehaltene Rohr strömen gegenläufig Abgase und beschränken hiermit wesentlich die Menge der mit dem Schrott eingebrachten Luft. Der Schrott fällt in ein abgekapseltes Schrottaufschmelzmodul 2. Dieses besteht aus einem mit Aluminiumschmelze gefüllten Tiegel 24, welcher durch eine, mit einer Pumpe 3 versehene Schmelzezuführung 4 derart tangential gespiesen wird, dass sich im Tiegel 24 ein Schmelzewirbel bildet. Die Pumpe 3 bezieht die Schmelze von einem benachbarten (nicht eingezeichneten) Ofen in einem Durchsatz von 60 t/Stunde. Der Schrott wird im Schmelzewirbel rasch unter die Schmelzeoberfläche gezogen, dort aufgewärmt und aufgeschmolzen. Die Schmelze verlässt den Tiegel 24 durch ein vertikales Schmelzerohr 9 und gelangt, bereits mit der entstandenen Krätze vermischt, in einen darunter liegenden Schmelzekanal 5, welcher bis zu einem Schmelzebadniveau 13 mit Aluminiumschmelze gefüllt ist. Das Rohr 9 wechselt an seinem unteren Ende in die Horizontale und taucht mit seiner Oeffnung vollständig in das Schmelzebad des Schmelzekanals 5. Die Schmelze strömt unter einem Damm 25, welcher bis unter das Schmelzebadniveau 13 ragt, hindurch in die Zone des Tauchwerks 10. In dieser Zone schwimmt die Krätze an die Badoberfläche und bildet dort eine etwa 50 mm dicke Schicht. Das über dem Schmelzekanal 5 angebrachte Tauchwerk 10 weist acht vertikal bewegliche, über eine Kurbelwelle angetriebene Stempel 11 auf, welche gegenseitig phasenverschoben mit einer Frequenz von 0.4 Hz und einem Hub von 200 mm durch die Krätzeschicht in die Schmelze tauchen.

Die acht Stempel 11 sind in zwei parallelen, gegeneinander um einen halben Stempelabstand versetzten Reihen angeordnet. Sie sind am schmelzeseitigen Teil über eine Länge von 300 mm quaderförmig gestaltet, mit einem quadratischen Querschnitt von 250 x 250 m². Diese Quader decken den entsprechenden Teil des Schmelzekanals 5, welcher dort 520 mm breit ist, weitgehend ab. Die Quader schliessen unten mit einem zusätzlich 120 mm hohen Keil ab, welcher mit einem Winkel von etwa 26° in Richtung des nachgeschalteten Krätzerührwerks 17 ansteigend angeschrägt ist. Die Stempel tauchen in ihrer tiefsten Lage mit halber Keilhöhe in die Schmelze. Die Stempel bestehen aus einem rost,- säure- und hitzebeständigen Gussstahl.

Dem Tauchwerk 10 nachgelagert ist ein über dem Schmelzekanal 5 angebrachtes Krätzerührwerk 17, bestehend aus zwei drehbar gelagerten Rührelementen 18. Die beiden, sich nicht schneidenden Drehachsen bilden mit der Vertikalen je einen Winkel von 16°. Die Rührelemente 18 weisen an ihrem unteren Ende drei 280 mm lange, sichelförmige Querstreben auf, welche zur Drehachse in einem Winkel von 74° stehen. An diesen Querstreben sind in einem rechten Winkel nach unten je sechs pyramidenstumpfförmige Rührbolzen 19 in einem gegenseitigen Abstand von je 50 mm angebracht. Die Rührbolzen 19 weisen eine Länge von 60 mm auf und ragen in ihrer tiefsten Lage bis 5 mm über das Schmelzebadniveau 13. Die Pyramidenstümpfe weisen an ihrem oberen, Querstreben-seitigen Ende eine Kantenlänge von 30 mm und an ihrem Schmelzeseitigen Ende eine solche von 15 mm auf. Die Längsachse der Rührbolzen 19 steht in der tiefsten Lage vertikal. Die Rührelemente 18 drehen mit einer Frequenz von 0.2 Hz. Die Temperatur der Metallschmelze und der Krätze beträgt im Bereich des Krätzerührwerks ca. 720 °C.

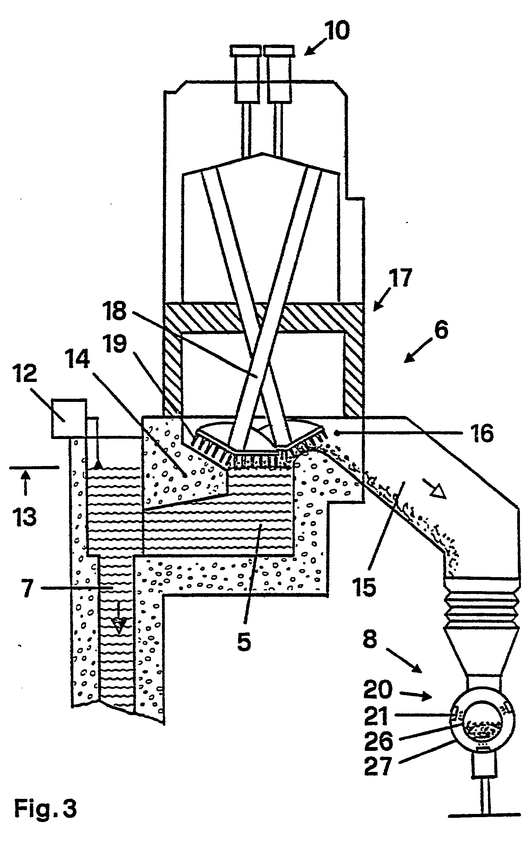

Wie in der Fig. 3 gezeigt, fliesst die Schmelze vom Bereich des Rührwerks 17 weiter unter einem Krätzedamm 14 durch, welcher etwa 200 mm unter das Schmelzebadniveau 13 ragt, dem Schmelzeabfluss 7 zu. Der Schmelzeabfluss 7 mündet in ein vertikales Rohr, welches seinerseits in einen -- nicht eingezeichneten -- Auffangschacht mündet, von wo die Schmelze wieder dem Ofen zugeführt wird. Diese Vertikalübergabe ist mit einer Düse ausgestattet, welche von einer Niveauregulieranlage 12 geregelt wird. Diese -- nicht explizit eingezeichnete -- Niveauregulieranlage 12 ist flussabwärts vom Krätzedamm 14 angebracht und hält von dort aus das Schmelzebadniveau 13, unabhängig von Metall- oder Schrottdurchsatz, konstant. Der ganze Schmelzekanal ist, vom Schrottaufschmelzmodul 2 bis zum Schmelzeabfluss 7, luftdicht zugedeckt. Der Sauerstoffpartialdruck über dem Schmelzekanal 5 beträgt 0.5 kPa.

Wie in der Fig. 3 schematisch dargestellt, weist der Schmelzekanal 5 etwa 50 mm oberhalb des Schmelzebadniveaus 13 eine Mündung 16 auf, an welcher luftdicht ein Krätzeabführkanal 15 angebracht ist. Das der Mündung 16 zugewandte Rührelement 18 schiebt die Krätze in pulverisiertem und schüttfähigen Zustand über diese Mündung 16. Vom abfallenden Krätzeabführkanal 15 aus gelangt die heisse Krätze in die Krätzeabkühlungsanlage 8. Diese weist einen Vibrationsförderkanal 20 auf, welcher mit einem Vibrator 22 einer Frequenz von 15 Hz verbunden ist. Der Vibrationsförderkanal 20 ist aus zwei koaxial angeordneten Röhren aufgebaut. Die innere Röhre 26 dient der Aufnahme und dem Transport der mittels Vibration fluidisierten Krätze, die äussere Röhre 27 umschliesst Kühlvorrichtungen 21, welche der Kühlung der inneren Röhre dienen. Ueber eine Länge von 18 m wird darin die Krätze auf unter 200 °C abgekühlt. Der Sauerstoffpartialdruck in der inneren Röhre 26 beträgt 0.6 kPa. Der Vibrationsförderkanal 20 weist anschliessend in seinem Ausgangsbereich einen Siphon 23 auf. Dieser wird durch eine Querklappe 28 in der inneren Röhre 26 gebildet, die dort als nach unten hängende Schleife gestaltet ist. Die Querklappe 28 ragt von oben senkrecht in den Krätzestrom und schliesst so die innere Röhre 26 gegen Luftzutritt ab. Die Krätze fliesst anschliessend als Pulver mit einem durchschnittlichen Durchmesser von etwa 0.5 mm über diverse Siebe in Sammelbehälter 29 .

Dem Schrott kann zur weiteren Erhöhung der Metallausbeute auf über 95 % in der Schrottbeschickungsanlage 1 Salz in einem Gewichtsverhältnis von 0.2 % beigegeben werden. Hierzu eignet sich ein Montanalsalz mit 10 % $Na_2CO_3$. Im heissen Behandlungsraum wird davon $CO_2$ freigesetzt.

**Patentansprüche**

1. Verfahren zur Aufbereitung feinteiligen Aluminiumschrotts durch Aufschmelzen des Schrotts in einer Aluminiumschmelze und Abscheiden der aufgetauchten, pulverisierten Krätze, dadurch gekennzeichnet, dass der Behandlungsraum von der Auftauchstelle der Krätze aus der Schmelze bis zur Krätzeentnahmestelle unter Luftabschluss mit einem Sauerstoffpartialdruck von höchstens 5 kPa steht und dass die Krätze kontinuierlich von der Schmelzeoberfläche abgezogen, mittels Vibration fluidisiert, durch eine Zone indirekter Kühlung geführt und dabei auf unter 200 °C abgekühlt wird, wobei der Weg der Krätze bis zu ihrer Abkühlung auf weniger als 200 °C unter Luftabschluss mit einem Sauerstoffpartialdruck von höchstens 5 kPa steht.

2. Verfahren nach Anspruch 1, dadurch gekennzeichnet, dass
a) der Schrott rasch unter die Schmelzeoberfläche getaucht und dort einem Schmelzestrahl ausgesetzt wird;
b) welcher anschliessend in einen Schmelzestrom unter dessen Oberfläche eingeleitet wird;
c) die sich stromabwärts an der Schmelzeoberfläche ansammelnde Krätze wiederholt geknetet und in die Schmelze getaucht wird;
d) die wiederaufgetauchte Krätze anschliessend über der Schmelzeoberfläche im wesentlichen parallel zu dieser bei einer Temperatur von mindestens dem Liquidus des dort vorliegenden Metalls mehrfach umgerührt und anschliessend in pulverisiertem und schüttfähigem Zustand von der Schmelzestromoberfläche abgeschoben wird;
e) der Schmelzestrom unter Regulierung seines Niveaus einem Abfluss zugeführt wird.

3. Verfahren nach Anspruch 2, dadurch gekennzeichnet, dass die abgeflossene Schmelze erwärmt und mindestens teilweise wieder der Schrotteintauchstelle zugeführt wird.

4. Verfahren nach Anspruch 2 oder 3, dadurch gekennzeichnet, dass die sich an der Schmelzestromoberfläche ansammelnde Krätze gleichzeitig mit der Tauchbewegung in Richtung der Umrührzone geschoben wird.

5. Verfahren nach wenigstens einem der Ansprüche 2 bis 4, dadurch gekennzeichnet, dass der Behandlungsraum mit einer Schutzgasatmosphäre versehen wird.

6. Verfahren nach wenigstens einem der Ansprüche 2 bis 5, dadurch gekennzeichnet, dass der Behandlungsraum mit einer reduzierenden Atmosphäre versehen wird.

7. Verfahren nach wenigstens einem der Ansprüche 1 bis 6, dadurch gekennzeichnet, dass dem Schrott vor dem Aufschmelzen ein Flussmittel in einem Gewichtsverhältnis von 0.05 bis 2 % beigemischt wird.

8. Verfahren nach Anspruch 7, dadurch gekennzeichnet, das als Flussmittel ein Salz zugegeben wird, welches als Zersetzungsprodukt $CO_2$ abgibt.

9. Verfahren nach wenigstens einem der Ansprüche 1 bis 8, dadurch gekennzeichnet, dass trockenem Schrott vor dem Aufschmelzen ein Oel in einem Gewichtsverhältnis von 0.1 bis 2 % beigemischt wird, welches als Crackprodukt ein reduzierendes Gas abgibt.

10. Vorrichtung zur Aufbereitung feinteiligen Aluminiumschrotts, mit einer Schrottbeschickungsanlage (1), einem Schrottaufschmelzmodul (2), einer in dieses mündenden, mit einer Pumpe (3) versehenen Schmelzezuführung (4), einem dem Schrottaufschmelzmodul (2) nachgeschalteten, mit Schmelze gefüllten Schmelzekanal (5), einer über diesem angebrachten Vorrichtung (6) zur Krätzeentnahme und einem Schmelzeabfluss (7), dadurch gekennzeichnet, dass der Schmelzekanal (5) im Bereich der aufgetauchten Krätze im mit Schmelze, Krätze und Gas gefüllten Betriebszustand luftdicht abgekapselt ist und dass der Schmelzekanal (5) oberhalb des Schmelzebadniveaus (13), als Teil der Krätzeentnahmevorrichtung (6), eine Mündung (16) aufweist, an welcher ein abfallender Krätzeabführkanal (15) angebracht ist, an dem eine Krätzeabkühlungsanlage (8) angeschlossen ist, welche einen Vibrationsförderkanal (20) aufweist, der an seiner Aussenseite mit Kühlvorrichtungen (21) versehen und der mit einem Vibrator (22) verbunden ist, wobei der Krätzeabführkanal (15) und der Vibrationsförderkanal (20) im mit Krätze und Gas gefüllten Betriebszustand nach aussen luftdicht abgekapselt sind.

11. Vorrichtung nach Anspruch 10, dadurch gekennzeichnet, dass

a) das Schrottaufschmelzmodul (2) mit dem Schmelzekanal (5) über ein in diesen, unter das Schmelzebadniveau (13) tauchendes Schmelzerohr (9) verbunden ist;

b) über dem Schmelzekanal (5), zwischen dem Schmelzerohr (9) und der Krätzeentnahmevorrichtung (6) ein Tauchwerk (10) angebracht ist, bestehend aus mehreren über die gesamte Breite der Schmelzeoberfläche des Schmelzekanals (5) verteilten, mit vertikaler Komponente beweglichen Stempeln (11), welche in ihrer tiefsten Lage bis unter das Schmelzebadniveau (13) ragen;

c) der Schmelzeabfluss (7) mit einer Niveauregulieranlage (12) zur Kontrolle des Schmelzebadniveaus (13) im Schmelzekanal (5) ausgerüstet ist;

d) der den Schmelzeabfluss (7) und die Niveauregulieranlage (12) umfassende Abschnitt des Schmelzekanals (5) vom übrigen Teil des Schmelzekanals (5) durch einen unter das Schmelzebadniveau (13) ragenden Krätzedamm (14) getrennt ist;

e) über dem Schmelzekanal (5), zwischen dem Tauchwerk (10) einerseits und dem Schmelzeabfluss (7) und der Mündung (16) des Krätzeabführkanals (15) andererseits ein Krätzerührwerk (17) angebracht ist, bestehend aus drehbar gelagerten, rechenartigen Rührelementen (18), welche mehrere in einem gegenseitigen Abstand von 20 bis 100 mm stehende Rührbolzen (19) einer Länge von 30 bis 100 mm aufweisen, wobei die Rührbolzen (19) in ihrer tiefsten Lage bis zu einem Niveau von 0 bis 20 mm über dem Schmelzebadniveau (13) hinunterragen und die Längsachse der Rührbolzen (19) in ihrer tiefsten Lage höchstens 30° von der Vertikalen abweichen.

12. Vorrichtung nach Anspruch 10 oder 11, dadurch gekennzeichnet, dass der Schmelzeabfluss (7) und die Schmelzezuführung (4) mit einem Ofen verbunden sind, welcher Aluminiumschmelze enthält, deren Badniveau tiefer als das Schmelzebadniveau (13) im Schmelzekanal (5) liegt.

13. Vorrichtung nach wenigstens einem der Ansprüche 10 bis 12, dadurch gekennzeichnet, dass der Vibrationsförderkanal (20) in seinem Ausgangsbereich einen Siphon (23) aufweist, in welchem die Krätze im Betriebszustand den Kanalquerschnitt luftdicht verschliesst.

14. Vorrichtung nach wenigstens einem der Ansprüche 11 bis 13, dadurch gekennzeichnet, dass die Stempel (11) des Tauchwerks (10) am schmelzeseitigen Teil quaderförmig gestaltet sind, wobei diese Quader keilartig mit einem Winkel von 10 bis 45° in Richtung Krätzerührwerk (17) ansteigend angeschrägt sind und dass diese Quader dicht benachbart angeordnet sind.

15. Vorrichtung nach wenigstens einem der Ansprüche 11 bis 14, dadurch gekennzeichnet, dass ein Rührelement (18) derart angeordnet und gestaltet ist, dass seine Rührbolzen (19) die Krätze über die Mündung (16) in den Krätzeabführkanal (15) abzuschieben vermögen.

## Claims

1. Process for the processing of finely divided aluminium scrap by melting the scrap in an aluminium melt and separating the pulverized dross which has risen to the surface, characterized in that the treatment space from the surfacing point of the dross from the melt up to the dross-removal point is, with the exclusion of air, under at a partial oxygen pressure of at most 5 kPa, and that the dross is draw off continuously from the melt surface, is fluidized by means of vibration, is conducted through a zone of indirect cooling and as a result is cooled down to below 200°C, the path of the dross up to the point where it is cooled down to below 200°C being, with the exclusion of air, under a partial oxygen pressure of not more than 5 kPa.

2. Process according to Claim 1, characterized in that

a) the scrap is plunged rapidly below the melt surface and in this location is exposed to a jet of molten metal;

b) which is introduced into a melt stream beneath its surface;

c) the dross collecting downstream on the melt surface is repeatedly kneaded and plunged into the melt;

d) the dross which has risen to the surface again is then repeatedly stirred over the melt surface essentially parallel to the latter at a temperature of at least the liquidus of the metal present there and is then pushed away from the surface of the melt stream in a pulverized and pourable state;

e) the melt stream is fed to a run-off while its level is regulated.

3. Process according to Claim 2, characterized in that the melt which has run off is heated and at least partly fed again to the scrap immersion point.

4. Process according to Claim 2 or 3, characterized in that the dross collecting on the surface of the melt stream is pushed in synchronism with the plunging movement in the direction of the stirring zone.

5. Process according to at least one of Claims 2 to 4, characterized in that the treatment space is provided with a protective gas atmosphere.

6. Process according to at least one of Claims 2 to 5, characterized in that the treatment space is provided with a reducing atmosphere.

7. Process according to at least one of Claims 1 to 6, characterized in that a flux, in a weight ratio of 0.5 to 2%, is added to the scrap before melting.

8. Process according to Claim 7, characterized in that a salt which releases $CO_2$ as a decomposition product is added as a flux.

9. Process according to at least one of Claims 1 to 8, characterized in that an oil which releases a reducing gas as a cracked product is added, in a weight ratio of 0.1 to 2%, to dry scrap before melting.

10. Installation for the processing of finely divided aluminium scrap, comprising a scrap-charging unit (1), a scrap-melting module (2), a melt feed (4), leading into this scrap-melting module (2) and provided with a pump (3), a melt channel (5), arranged downstream from the scrap-melting module (2) and filled with melt, a device (6), attached above this melt channel (5), for removing dross, and a melt run-off (7), characterized in that the melt channel (5), in the area of the dross which has risen to the surface, is encapsulated air-tight in the operating condition in which it is filled with melt, dross and gas, and that the melt channel (5), above the bath level (13) of the melt, has, as part of the dross-removal device (6), an orifice (16) to which a downward sloping drossdischarge channel (15) is attached to which a drosscooling unit (8) is connected which has a vibratory feed channel (20) which, on its outer side, is provided with cooling devices (21) and is connected to a vibrator (22), the dross-discharge channel (15) and the vibratory feed channel (20) being encapsulated airtight to the outside in the operating condition in which they are filled with dross and gas.

11. Installation according to Claim 10, characterized in that a) the scrap-melting module (2) is connected to the melt channel (5) via a melt tube (9) plunging into the latter below the bath level (13) of the melt;

b) attached above the melt channel (5) between the melt tube (9) and the dross-removal device (6) is a plunge mechanism (10) consisting of a plurality of plungers (11) which are distributed over the entire width of the melt surface of the melt channel (5), are movable with a vertical component and in their deepest position project down below the bath level (13) of the melt;

c) the melt run-off (7) is equipped with a levelregulating unit (12) for controlling the bath level (13) of the melt in the melt channel (5);

d) the section of the melt channel (5) containing the melt run-off (7) and the level-regulating unit (12) is separated from the remaining part of the melt channel (5) by a dross dam (14) projecting below the bath level (13) of the melt;

e) attached above the melt channel (5), between the plunge mechanism (10) on the one side and the melt runoff (7) and the orifice (16) of the dross-discharge channel (15) on the other side, is a dross stirrer (17) consisting of rotatably mounted, rake-like stirring elements (18) which have a plurality of stirring pins (19) which are at a mutual distance apart of 20 to 100 mm and have a length of 30 to 100 mm, the stirring pins (19), in their deepest position, projecting down to a level of 0 to 20 mm above the bath level (13) of the melt, and the longitudinal axis of the stirring pins (19), in their deepest position, deviating by no more than 30° from the vertical.

12. Installation according to Claim 10 or 11, characterized in that the melt run-off (7) and the melt feed (4) are connected to a furnace which contains an aluminium melt whose bath level lies below the bath level (13) of the melt in the melt channel (5).

13. Installation according to at least one of Claims 10 to 12, characterized in that the vibratory feed channel (20) in its outlet area, has a siphon (23) in which the dross, in the operating condition, closes the channel cross-section air-tight.

14. Installation according to at least one of Claims 11 to 13, characterized in that the plungers (11) of the plunge mechanism (10), at the part on the melt side, are formed in the shape of a parallelepiped, this parallelepiped being bevelled wedge-like at an angle of 10 to 45° up towards the dross stirrer (17), and that these parallelepipeds are arranged closely next to each other.

15. Installation according to at least one of Claims 11 to 14, characterized in that one stirring element (18) is arranged and configured in such a way that its stirring pins (19) are able to push the dross away over the orifice (16) into the dross-discharge channel (15).

**Revendications**

1. Procédé de préparation de déchets d'aluminium finement divisés par première fusion des déchets dans un bain d'aluminium et séparation de la crasse émergée, pulvérisée, caractérisé en ce que l'espace de traitement, depuis l'endroit où les crasses émergent hors du bain de fusion, jusqu'à l'endroit où les crasses sont évacuées, est à l'abri de l'air avec une pression partielle d'oxygène d'au maximum 5 kPa; et en ce que les crasses sont enlevées de façon continue hors de la surface du bain de fusion, fluidisées par vibration, conduites dans une zone de refroidissement indirect et y sont refroidies jusqu'en dessous de 200°C, étant précisé que le chemin des crasses jusqu'à leur refroidissement à moins de 200°C est à l'abri de l'air avec une pression partielle d'oxygène d'au maximum 5 kPa.

2. Procédé selon la revendication 1, caractérisé en ce que a) on fait rapidement plonger les déchets sous la surface du bain et on les y expose à un jet de bain de fusion;

b) qui est ensuite amené dans un flux du bain de fusion, sous sa surface;

c) on pétrit, de façon répétée, la crasse qui se rassemble en aval, à la surface du bain de fusion, et on la fait plonger dans le bain;

d) ensuite, on agite plusieurs fois la crasse qui émerge à nouveau au-dessus de la surface du bain, sensiblement parallèlement à cette surface, à une température d'au moins la température du liquidus du métal qui s'y trouve, puis on l'évacue hors de la surface du flux du bain de fusion, à l'état pulvérisé et pouvant se déverser;

e) on amène le flux du bain de fusion à une sortie sous réserve de régulation de son niveau.

3. Procédé selon la revendication 2, caractérisé en ce que l'on réchauffe le bain de fusion sorti et qu'on l'amène à nouveau au moins partiellement à l'endroit d'immersion des déchets. 4. Procédé selon la revendication 2 ou 3, caractérisé en ce que, en même temps que le mouvement de plongée, on déplace en direction de la zone d'agitation la crasse qui s'est rassemblée à la surface du flux du bain de fusion.

5. Procédé selon au moins l'une des revendications 2 à 4, caractérisé en ce que l'espace de traitement est muni d'une atmosphère de gaz protecteur.

6. Procédé selon au moins l'une des revendications 2 à 5, caractérisé en ce que l'espace de traitement est muni d'une atmosphère réductrice.

7. Procédé selon au moins l'une des revendications 1 à 6, caractérisé en ce qu'avant première fusion des déchets, on y ajoute, en les mélangeant, un fondant dans un rapport de 0.05 à 2% en poids.

8. Procédé selon la revendication 7, caractérisé en ce que comme fondant on ajoute un sel qui dégage du $CO_2$ comme produit de décomposition .

9. Procédé selon au moins l'une des revendications 1 à 8, caractérisé en ce qu'avant première fusion, on ajoute aux déchets secs, et on mélange, dans un rapport de 0.1 à 2% en poids, une huile qui dégage, comme produit de craquage, un gaz réducteur.

10. Dispositif de préparation de déchets d'aluminium finement divisés, comportant une installation (1) de chargement des déchets, un module (2) de première fusion des déchets, une arrivée du bain de fusion (4) débouchant dans le module de première fusion et muni d'une pompe (3), un canal (5) du bain de fusion, placé en aval du module (2) de première fusion des déchets et rempli de bain de fusion, un dispositif (6) rapporté par-dessus ce canal pour évacuer la crasse, ainsi qu'une sortie du bain de fusion (7), caractérisé en ce que, dans la zone où la crasse émerge, le canal (5) du bain de fusion est encapsulé de façon étanche à l'air, dans l'état d'exploitation, rempli de bain de fusion, de crasse et de gaz; et en ce qu'au-dessus du niveau (13) du bain de fusion, le canal de bain de fusion (5) présente, comme faisant partie du dispositif (6) d'évacuation de la crasse, une embouchure (16) à laquelle est rapporté un canal en pente (15) d'évacuation de la crasse auquel est raccordée une installation (8) de refroidissement de la crasse qui présente un canal (20) de transport par vibration qui est muni, sur sa face extérieure, de dispositifs de refroidissement (21) et qui est relié à un vibrateur (22), étant précisé que le canal (15) d'évacuation de la crasse et le canal (20) de transport par vibration sont encapsulés de façon étanche à l'égard de l'air extérieur, dans l'état d'exploitation, rempli de crasse et de gaz.

11. Dispositif selon la revendication 10, caractérisé en ce que

a) le module (2) de première fusion des déchets est relié au canal (5) du bain de fusion par l'intermédiaire d'un tube (9), de transport du bain de fusion, qui plonge dans le canal, en dessous du niveau (13) du bain de fusion;

b) au-dessus du canal (5) du bain de fusion, entre le tube (9) de transport du bain de fusion et le dispositif (6) d'évacuation de la crasse est rapporté un dispositif de plongée (10) constitué de plusieurs poussoirs (11) qui sont répartis sur toute la largeur de la surface du bain de fusion du canal (5) du bain de fusion, qui sont mobiles avec une composante de mobilité verticale et qui, dans leur position la plus basse, vont jusqu'en dessous du niveau (13) du bain de fusion;

c) la sortie (7) du bain de fusion est équipée d'une installation (12) de régulation du niveau pour commander le niveau (13) du bain de fusion dans le canal (5) du bain de fusion;

d) le tronçon du canal (5) du bain de fusion qui comprend la sortie (7) du bain de fusion et l'installation (12) de régulation du niveau est séparé de l'autre partie du canal (5) du bain de fusion par un barrage (14), pénétrant sous le niveau (13) du bain de fusion, pour la crasse;

e) au-dessus du canal (5) du bain de fusion, entre le dispositif de plongée (10) d'une part et la sortie (7) du bain de fusion et l'embouchure (16) du canal (15) d'évacuation de la crasse d'autre part, est rapporté un dispositif d'agitation (17) de la crasse, constitué d'éléments agitateurs (18), en forme de rateaux, qui sont portés avec liberté de rotation, et qui présentent plusieurs tiges agitatrices (19), disposées à une distance mutuelle de 10 à 100 mm et d'une longueur de 30 à 100 mm, étant précisé que dans leur position la plus basse les tiges agitatrices (19) descendent jusqu'à un niveau allant de 0 à 20 mm au-dessus du niveau (13) du bain de fusion et que, dans leur position la plus basse, l'axe longitudinal des tiges agitatrices (19) s'écarte au maximum de 30°C.

12. Dispositif selon la revendication 10 ou 11, caractérisé en ce que la sortie (7) du bain de fusion et l'arrivée (4) du bain de fusion sont réunies à un four qui contient un bain de fusion d'aluminium dont le niveau se trouve en dessous du niveau (13) du bain de fusion qui se trouve dans le canal (5) du bain de fusion.

13. Dispositif selon au moins l'une des revendications 10 à 12, caractérisé en ce que le canal (20) de transport par vibration présente, dans sa zone de sortie, un siphon (23) dans lequel, à l'état d'exploitation, la crasse obture de façon étanche à l'air la section du canal.

14. Dispositif selon au moins l'une des revendications 11 à 13, caractérisé en ce que les poussoirs (11) du dispositif de plongée (10) ont, à leur partie côté bain, la forme d'un parallélépipède, étant précisé que ces parallélépipèdes présentent un chanfrein montant en direction du dispositif (17) d'agitation de la crasse, en forme de coin, sous un angle de 10 à 45°; et que ces parallélépipèdes sont disposés étroitement voisins.

15. Dispositif selon au moins l'une des revendications 11 à 14, caractérisé en ce qu'un élément agitateur (18) est disposé de telle façon et a une forme telle que ses tiges agitatrices (19) peuvent envoyer la crasse dans le canal (15) d'évacuation de la crasse par l'embouchure (16).

Fig.1

Fig. 2

Fig. 3